# FASCICULE DE BREVET EUROPEEN

(11) **EP 3 969 191 B1**
(45) Date de publication et mention de la délivrance du brevet: **06.11.2024**
(21) Numéro de dépôt: 20731929.4
(22) Date de dépôt: 05.05.2020
(51) Int. Cl.: B07B 1/02, B07B 13/16

(54) **DISPOSITIF D´UTILISATION D´UN PRODUIT D´ABSORPTION DE FLUIDES REPANDUS AVEC RECYCLAGE DE CE PRODUIT**
VORRICHTUNG ZUR VERWENDUNG EINES PRODUKTES ZUM ABSORBIEREN VON VERSCHÜTTETEN FLUIDEN, EINSCHLIESSLICH RECYCLING DES PRODUKTES
DEVICE FOR USING A PRODUCT FOR ABSORBING SPILLED FLUIDS, INCLUDING RECYCLING OF SAID PRODUCT

(30) Priorité: 17.05.2019 FR 1905179
(43) Date de publication de la demande: 23.03.2022
(73) Titulaire: SRI FRANCE, 69310 Pierre Bénite (FR)
(72) Inventeur: CHOMETTE, Bertrand, 42000 SAINT ETIENNE (FR); MATHIEU, Frédéric, 69340 FRANCHEVILLE (FR)
(74) Mandataire: Germain Maureau
(86) Numéro de dépôt international: PCT/FR2020/050745
(87) Numéro de publication internationale: WO 2020/234522

(56) Documents cités:
- CA-A1- 2 919 640
- GB-A- 2 346 077
- GB-A- 268 657
- GB-A- 588 039
- US-A1- 2016 325 314

## Description

La présente invention concerne un dispositif d'utilisation d'un produit absorbant en poudre ou en granulés, ainsi qu'un procédé de mise en oeuvre d'un tel dispositif.

Après l'écoulement d'un fluide sur un sol, en particulier des produits chimiques, des hydrocarbures ou des huiles, il est connu d'utiliser un produit absorbant sous forme de poudre ou granulés, qui est répandu sur les taches afin dans un premier temps d'absorber ce fluide.

On ramasse ensuite le produit absorbant gonflé par le fluide, par exemple par balayage, pour retirer la majeure partie du fluide répandu sur le sol. On peut enfin si nécessaire passer sur le sol un solvant ou un produit de nettoyage comme une lessive, afin d'assurer la propreté de ce sol.

Pour ces différentes opérations il est connu d'utiliser des chariots équipés de tous les éléments nécessaires, comportant un bac de stockage contenant le produit absorbant, un bac de réception recevant le produit absorbant souillé, et les différents outils nécessaires pour réaliser ces opérations comme un balai et une pelle.

De cette manière le personnel de nettoyage peut se déplacer rapidement sur le lieu de l'incident pour d'abord récupérer au maximum le fluide déversé avec le produit absorbant, puis ensuite ramasser et jeter dans le bac de réception ce produit souillé. Une fois le bac de réception rempli, le produit souillé peut être récupéré et traité par des entreprises spécialisées dans les meilleures conditions de sécurité et de respect de l'environnement.

On notera que certains produits répandus peuvent présenter des risques, comme des produits chimiques dégageant des vapeurs toxiques, des produits gras et glissants pouvant causer des accidents, ou des produits qui finissent par imprégner le sol en les polluant. Le personnel doit pouvoir intervenir rapidement pour effectuer de manière efficace et complète le ramassage.

Afin d'optimiser les qualités du produit absorbant utilisé, certains fournisseurs ont développé des poudres ou des granulés présentant un pouvoir élevé d'absorption, notamment à base de fibres de cellulose, afin de récupérer de manière rapide et sûr un maximum de fluide répandu.

Toutefois la totalité du produit absorbant répandu à terre est ensuite jetée dans le bac de récupération ce qui donne une consommation importante de produit, qui peut présenter un coût élevé, et génère une masse de déchets entraînant aussi des coûts pour son élimination.

Le document GB2346077 A divulgue un dispositif selon le préambule de la revendication 1.

La présente invention a notamment pour but d'éviter ces inconvénients de la technique antérieure.

Elle propose à cet effet un dispositif d'utilisation d'un produit absorbant, notamment en poudre ou en granules, pour absorber des fluides répandus au sol selon la revendication 1, comprenant un container équipé d'un bac de stockage de ce produit absorbant, et d'un bac de réception du produit absorbant souillé, ce dispositif étant remarquable en ce qu'il comporte un réceptacle de tamisage comprenant au fond un tamis disposé au-dessus d'une ouverture du bac de stockage, pouvant être vidé dans le bac de réception.

Un avantage du dispositif selon l'invention est qu'après l'épandage au sol du produit absorbant, l'opérateur verse simplement ce produit souillé dans le réceptacle équipé du tamis, pour ensuite avec une vibration obtenir un tamisage de ce produit laissant passer la poudre ou les granulés non souillés restant sous forme de particules fines, qui descendent et sont recyclées dans le bac de stockage. Une fois ce tamisage fini l'opérateur bascule le réceptacle pour verser dans le bac de réception le produit restant effectivement souillé, qui s'est aggloméré en formant des grumeaux.

On obtient ainsi à la fois une récupération maximum du produit absorbant non souillé, qui est prêt à servir pour des opérations suivantes, et une élimination d'un minimum de déchets qui sont effectivement souillés.

Le dispositif d'utilisation du produit absorbant selon l'invention peut comporter de plus une ou plusieurs des caractéristiques suivantes, qui peuvent être combinées entre elles.

Avantageusement, l'ouverture du bac de stockage correspond au contour extérieur de ce bac de stockage.

Selon l'invention, le réceptacle de tamisage comporte un guidage dans le container.

En outre selon l'invention, le réceptacle de tamisage comporte des épaulements extérieurs qui viennent au-dessus de bossages formés à l'intérieur du container.

Avantageusement, le réceptacle de tamisage comporte une poignée disposée sur une face avant du container, le guidage dans le container se faisant suivant une direction perpendiculaire à cette face avant.

Avantageusement, le bac de réception est disposé à côté du réceptacle de tamisage.

Dans ce cas, avantageusement le réceptacle de tamisage comporte sur la partie supérieure d'un de ses côtés une goulotte horizontale dont l'extrémité vient au-dessus du bac de réception.

De plus, avantageusement le réceptacle de tamisage comporte une forme venant en appui sur un bord du bac de réception, constituant un pivot permettant de verser la goulotte dans ce bac de réception.

Avantageusement, le réceptacle de tamisage comporte au fond un tamis présentant des bosselages.

L'invention a aussi pour objet un procédé de mise en oeuvre d'un dispositif d'utilisation d'un produit absorbant, notamment en poudre ou granules, selon la revendication 8, comportant une opération de secouage du réceptacle de tamisage suivant des guidages au-dessus du bac de stockage, puis une opération de basculement du réceptacle de tamisage vidant des grumeaux formés par le produit souillé dans le bac de réception, et enfin une opération de remise en position du réceptacle de tamisage au-dessus du bac de stockage.

L'invention sera mieux comprise et d'autres caractéristiques et avantages apparaîtront plus clairement à la lecture de la description ci-après donnée à titre d'exemple, en référence aux dessins annexés dans lesquels :
[Fig. 1] présente un dispositif d'utilisation selon l'invention comprenant le couvercle supérieur ouvert ;
[Fig. 2] présente ce dispositif d'utilisation comprenant les différents bacs qui sont sortis ;
[Fig. 3] présente ce dispositif d'utilisation en coupe suivant un plan médian vertical, pendant le recyclage du produit absorbant, lors d'une première opération de tamisage ;
[Fig. 4] présente ce dispositif d'utilisation lors d'une deuxième opération de fin du tamisage ;
[Fig. 5] présente ce dispositif d'utilisation lors d'une troisième opération de déversement des grumeaux ;
[Fig. 6] présente ce dispositif d'utilisation lors d'une quatrième opération de basculement du réceptacle de tamisage ; et
[Fig. 7] présente ce dispositif d'utilisation lors d'une cinquième opération de remise en place du réceptacle de tamisage.

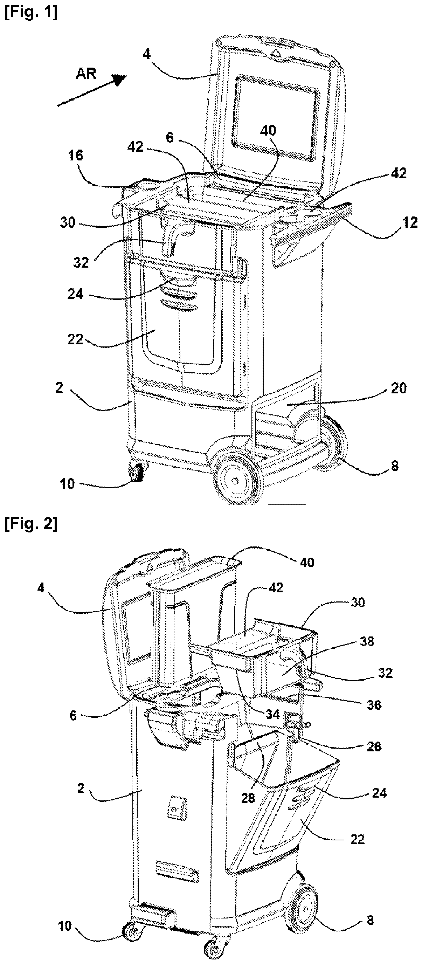

Les figures 1 et 2 présentent un chariot comprenant un container 2 comportant une forme parallélépipédique allongée verticalement, disposant d'un couvercle 4 fixé par une charnière 6 en haut du côté arrière de ce container indiqué par la flèche AR.

En regardant la face avant du container 2, disposée suivant une direction appelée largeur du container, la base du côté droit comporte un axe disposé suivant la longueur recevant deux roulettes fixes 8, et la base du côté gauche comporte à chaque angle une roulette pivotante suivant un axe vertical 10 pour assurer la mobilité du chariot dans toutes les directions.

Une poignée supérieure 12 fixée en haut du côté droit, reliée au container 2 par deux alvéoles 14 pouvant recevoir des flacons ou des petits objets, permet de déplacer facilement le chariot même avec une charge importante disposée à l'intérieur. Le côté gauche du container 2 comporte en partie supérieure une alvéole 16 permettant aussi d'y loger des flacons.

Le côté droit comporte en partie inférieure une ouverture 20 débouchant sur un compartiment inférieur occupant environ un quart de la hauteur du container 2, permettant d'y loger différents produits.

La face avant du container 2 est entièrement ouverte au-dessus du compartiment inférieur. Un bac de stockage 22 d'un produit absorbant en poudre ou en granulés, comporte une face avant ajustée sur la face avant du container, des côtés ajustés à l'intérieur des côtés droit et gauche du container, et une face arrière disposée environ aux deux tiers de la longueur de ce container. L'ouverture supérieure du bac de stockage 22 formée suivant le contour extérieur complet de ce bac, arrive environ aux trois quarts de la hauteur du container 2.

Le bac de stockage 22 est relié au container 2 par un pivot inférieur disposé suivant la largeur permettant son basculement vers l'avant comme présenté figure 2, une poignée 24 formée sur la partie supérieure de sa face avant facilitant cette traction.

Chaque côté du container 2 comporte sur sa face intérieure un taquet 26 qui descend légèrement à l'intérieur du bac de stockage 22, en venant sur un épaulement intérieur du bac quand il est entièrement basculé vers l'avant afin d'éviter une chute de ce bac. De cette manière on peut facilement ouvrir le bac de stockage 22 en le tirant par sa poignée 24, pour dégager vers l'avant son ouverture supérieure et effectuer son remplissage.

Un réceptacle de tamisage 30 présente une forme sensiblement rectangulaire s'ajustant dans la largeur du container 2, disposant d'une poignée tournée vers l'avant 32 qui facilite sa préhension et son mouvement.

Le réceptacle de tamisage 30 comporte de chaque côté sur sa longueur un épaulement extérieur horizontal 34, formant un surplomb qui repose sur un bossage correspondant 36 formé à l'intérieur du côté droit et gauche du container 2, pour constituer des rails de guidage suivant la longueur de ce container comprenant des butées aux extrémités.

Le réceptacle de tamisage 30 comporte un fond horizontal formant un tamis inférieur 38, présentant une surface de passage qui reste à l'intérieur de l'ouverture du bac de stockage 22 lors des mouvements à l'aide de la poignée 32 de ce réceptacle, limités par ses butées, pour s'assurer que la totalité du produit absorbant traversant le tamis tombe dans ce bac. Le tamis 38 présente une surface globalement plate horizontale comprenant des bosselages répartis sur cette surface.

Un bac de réception du produit absorbant souillé 40 présentant une forme parallélépipédique allongée en hauteur, comporte une largeur s'ajustant à l'intérieur des deux côtés du container 2, une longueur correspondant environ au quart de la longueur de ce container, et une hauteur correspondant environ à la moitié de la hauteur du container.

Le bord supérieur arrière du bac de stockage 22 comporte un béquet 28 tourné vers l'arrière, qui vient en appui sur la face avant du bac de réception 40 afin de fermer entièrement le passage entre ces deux bacs pour éviter des descentes de produit absorbant qui tomberait entre eux, en dehors du bac de stockage.

Le réceptacle de tamisage 30 comporte en partie supérieure de sa face arrière une goulotte horizontale 42 s'étendant sur toute la largeur de cette face arrière, qui se termine sensiblement au milieu du bac de réception 40. Le bac de réception 40 et le réceptacle de tamisage 30 s'enlèvent facilement en les soulevant hors du container 2.

L'ensemble des composants du chariot, comprenant notamment le container 2 formé de plusieurs panneaux assemblés constituant chacun un côté, le couvercle 4, le bac de stockage 22, le réceptacle de tamisage 30 avec son tamis 38 et le bac de réception 40, sont formés par un moulage de matière plastique qui permet de réaliser de manière économique des éléments rigides et légers.

Avantageusement l'opérateur dispose sur le chariot contenant du produit absorbant dans le bac de stockage 22, un balai, une pelle, du produit de nettoyage et des accessoires comme des chiffons, de manière lors d'une intervention à disposer de tous les équipements nécessaires pour ramasser un fluide répandu et nettoyer le sol.

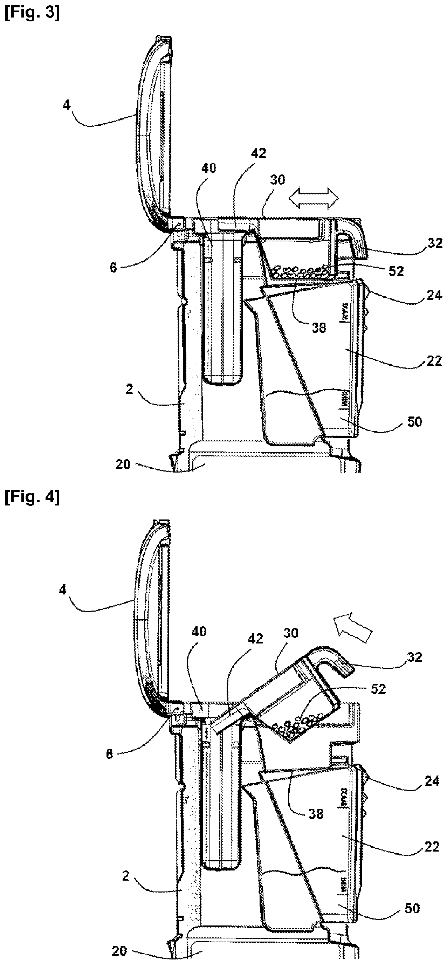

La figure 3 présente après le prélèvement du produit absorbant propre 50 dans le bac de stockage 22 et son épandage sur le fluide répandu au sol, et après un temps d'absorption permettant aux fibres de ce produit de récupérer un maximum de fluide, le ramassage avec un balai et une pelle du produit souillé comprenant des grumeaux 52 qui est déversé dans le réceptacle de tamisage 30.

Dans une opération suivante l'opérateur saisit la poignée 32 du réceptacle de tamisage 30, et applique un mouvement alternatif vigoureux suivant la longueur en le faisant coulisser sur ses rails pour obtenir une descente au travers du tamis 38 du produit absorbant 50 qui n'a pas été en contact avec le fluide, restant sous forme de poudre ou granulés assez fins pour ne pas traverser le tamis.

Le bosselage du tamis 38 facilite le mouvement et le tri du produit absorbant, en faisant rouler les grumeaux 52 formés par la poudre ou les granules agglomérés par le fluide absorbé, et en dégageant les mailles du tamis pour laisser passer le produit propre.

La figure 4 présente une opération suivante réalisée quand l'opérateur constate que la totalité du produit absorbant propre 50 est descendue dans le bac de stockage 22.

L'opérateur soulève la poignée 32 en faisant basculer le réceptacle de tamisage 30 autour d'un pivot formé par la jonction de la goulotte 42 avec la face arrière du réceptacle de tamisage 30, tournant autour du bord supérieur avant du bac de réception 40. De cette manière le réceptacle de tamisage 30 est guidé en laissant l'extrémité arrière de sa goulotte 42 descendre dans le bac de réception 40.

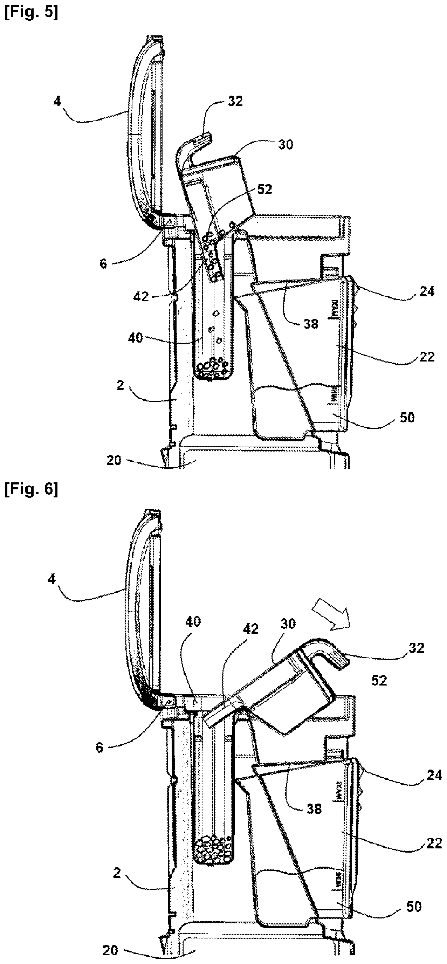

La figure 5 présente une opération suivante comprenant le basculement complet du réceptacle de tamisage 30, venant dans une position sensiblement verticale, la totalité des grumeaux 52 descendant dans le bac de réception 40. La figure 6 présente une opération suivante comprenant le basculement inverse du réceptacle de tamisage 30 qui est vide.

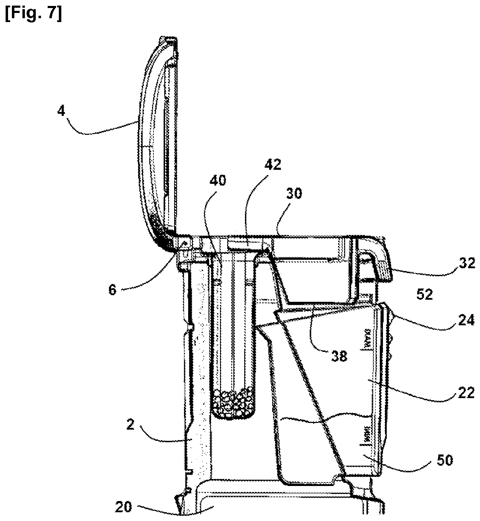

La figure 7 présente une opération suivante comprenant la remise en place du réceptacle de tamisage 30 dans son logement en haut du container 2. Le chariot est prêt pour une opération suivante tant qu'il reste du produit absorbant propre 50 dans le bac de stockage 22 et de la place dans le bac de réception 40.

Une opération ultérieure de vidage du bac de réception 40 se fait facilement en soulevant le réceptacle de tamisage 30, et le bac de réception 40 qui coulisse verticalement pour être vidé. Une autre opération ultérieure de remplissage du bac de stockage 22 se fait facilement en tirant sa poignée 24 pour le basculer vers l'avant, ce qui dégage son ouverture supérieure permettant de le remplir par exemple avec une pelle, ou en vidant un sac dedans.

## Revendications

1. Dispositif d'utilisation d'un produit absorbant, notamment en poudre ou en granules (50), pour absorber des fluides répandus au sol, comprenant un container (2) équipé d'un bac de stockage (22) de ce produit absorbant (50), et d'un bac de réception (40) du produit absorbant souillé (52), le dispositif comportant un réceptacle de tamisage (30) comprenant au fond un tamis (38) disposé au-dessus d'une ouverture du bac de stockage (22), pouvant être vidé dans le bac de réception (40), **caractérisé en ce que** le réceptacle de tamisage (30) comporte un guidage dans le container (2), et des épaulements extérieurs (34) qui viennent au-dessus de bossages (36) correspondant, formés à l'intérieur d'un côté droit et d'un côté gauche du container (2), lesdits bossages (36) constituant des rails de guidage suivant la longueur de ce container (2).

2. Dispositif d'utilisation selon la revendication 1, **caractérisé en ce que** l'ouverture du bac de stockage (22) correspond au contour extérieur complet de ce bac de stockage (22).

3. Dispositif d'utilisation selon la revendication 1 ou 2, **caractérisé en ce que** le réceptacle de tamisage (30) comporte une poignée (32) disposée sur une face avant du container (2), le guidage dans le container (2) se faisant suivant une direction perpendiculaire à cette face avant.

4. Dispositif d'utilisation selon l'une quelconque des revendications précédentes, **caractérisé en ce que** le bac de réception (40) est disposé à côté du réceptacle de tamisage (30).

5. Dispositif d'utilisation selon la revendication 4, **caractérisé en ce que** le réceptacle de tamisage (30) comporte sur la partie supérieure d'un de ses côtés une goulotte horizontale (42) dont l'extrémité vient au-dessus du bac de réception (40).

6. Dispositif d'utilisation selon la revendication 5, **caractérisé en ce que** le réceptacle de tamisage (30) comporte une forme venant en appui sur un bord du bac de réception (40), constituant un pivot permettant de verser la goulotte (42) dans ce bac de réception (40).

7. Dispositif d'utilisation selon l'une quelconque des revendications précédentes, **caractérisé en ce que** le réceptacle de tamisage (30) comporte au fond un tamis (38) présentant des bosselages.

8. Procédé de mise en oeuvre d'un dispositif d'utilisation d'un produit absorbant, en poudre ou granules (50), selon l'une quelconque des revendications précédentes, le procédé comportant une opération de secouage du réceptacle de tamisage (30) suivant des guidages au-dessus du bac de stockage (22), puis une opération de basculement du réceptacle de tamisage (30) vidant des grumeaux (52) formés par le produit souillé dans le bac de réception (40), et enfin une opération de remise en position du réceptacle de tamisage (30) au-dessus du bac de stockage (22).

## Patentansprüche

1. Vorrichtung zur Verwendung eines absorbierenden Produkts (50), insbesondere in Form von Pulver oder Granulat, um auf dem Boden verteilte Fluide zu absorbieren, umfassend einen Behälter (2), der mit einem Vorratstank (22) für das absorbierende Produkt (50) ausgestattet ist, und einen Aufnahmetank (40) für das verschmutzte absorbierende Produkt (52), wobei die Vorrichtung ein Siebbehältnis (30) enthält, das am Boden ein Sieb (38) umfasst, das über einer Öffnung des Vorratstanks (22) angeordnet ist und in den Aufnahmetank (40) geleert werden kann, **dadurch gekennzeichnet, dass** das Siebbehältnis (30) eine Führung im Behälter (2) und äußere Schultern (34) enthält, die über entsprechenden Vorsprüngen (36) liegen, die an der Innenseite einer rechten Seite und einer linken Seite des Behälters (2) ausgebildet sind, wobei die Vorsprünge (36) Führungsschienen entlang der Länge des Behälters (2) bilden.

2. Verwendungsvorrichtung nach Anspruch 1, **dadurch gekennzeichnet, dass** die Öffnung des Vorratstanks (22) der vollständigen Außenkontur des Vorratstanks (22) entspricht.

3. Verwendungsvorrichtung nach Anspruch 1 oder 2, **dadurch gekennzeichnet, dass** das Siebbehältnis (30) einen Griff (32) enthält, der an einer Vorderseite des Behälters (2) angeordnet ist, wobei die Führung im Behälter (2) in einer Richtung senkrecht zu der Vorderseite erfolgt.

4. Verwendungsvorrichtung nach einem der vorhergehenden Ansprüche, **dadurch gekennzeichnet, dass** der Aufnahmetank (40) neben dem Siebbehältnis (30) angeordnet ist.

5. Verwendungsvorrichtung nach Anspruch 4, **dadurch gekennzeichnet, dass** das Siebbehältnis (30) im oberen Teil einer seiner Seiten eine horizontale Rutsche (42) enthält, deren Ende über dem Aufnahmetank (40) liegt.

6. Verwendungsvorrichtung nach Anspruch 5, **dadurch gekennzeichnet, dass** das Siebbehältnis (30) eine Form enthält, die an einem Rand des Aufnahmetanks (40) anliegt und einen Drehpunkt bildet, der es ermöglicht, die Rutsche (42) in den Aufnahmetank (40) zu schütten.

7. Verwendungsvorrichtung nach einem der vorhergehenden Ansprüche, **dadurch gekennzeichnet, dass** das Siebbehältnis (30) am Boden ein Sieb (38) enthält, das Vorsprünge aufweist.

8. Verfahren zum Implementieren einer Vorrichtung zum Verwenden eines absorbierenden Produkts aus Pulver oder Granulat (50) nach einem der vorhergehenden Ansprüche, wobei das Verfahren einen Vorgang des Schüttelns des Siebbehältnisses (30) entlang von Führungen über dem Vorratstank (22) und anschließend einen Vorgang des Kippens des Siebbehältnisses (30) zum Entleeren von Klumpen (52), die durch das verschmutzte Produkt im Aufnahmetank (40) gebildet werden, und schließlich einen Vorgang umfasst, bei dem das Siebbehältnis (30) wieder über dem Vorratstank (22) in Position gebracht wird.

## Claims

1. A device for using an absorbent product, in particular a powdered or granular product (50), for absorbing fluids spilled on the floor, comprising a container (2) equipped with a tank (22) for storing this absorbent product (50), and a tank (40) for receiving the soiled absorbent product (52), the device including a sieving receptacle (30) comprising at the bottom a sieve (38) arranged above an opening of the storage tank (22), which can be emptied into the receiving tank (40), **characterized in that** the sieving receptacle (30) includes a guide in the container (2), and outer shoulders (34) which come above corresponding bosses (36), formed inside a right side and a left side of the container (2), said bosses (36) constituting guide rails along the length of this container (2).

2. The using device according to claim 1, **characterized in that** the opening of the storage tank (22) corresponds to the complete outer contour of this storage tank (22).

3. The using device according to claim 1 or 2, **characterized in that** the sieving receptacle (30) includes a handle (32) arranged on a front face of the container (2), the guide in the container (2) taking place in a direction perpendicular to this front face.

4. The using device according to any one of the preceding claims, **characterized in that** the receiving tank (40) is arranged next to the sieving receptacle (30).

5. The using device according to claim 4, **characterized in that** the sieving receptacle (30) includes on the upper part of one of its sides a horizontal chute (42) whose end comes above the receiving tank (40).

6. The using device according to claim 5, **characterized in that** the sieving receptacle (30) includes a shape bearing on an edge of the receiving tank (40), constituting a pivot allowing pouring the chute (42) into this receiving tank (40).

7. The using device according to any one of the preceding claims, **characterized in that** the sieving receptacle (30) includes at the bottom a sieve (38) having embossings.

8. A method for implementing a device for using a powdered or granular absorbent product (50), according to any one of the preceding claims, the method including an operation of shaking the sieving receptacle (30) following guides above the storage tank (22), then a tilting operation of the sieving receptacle (30) emptying lumps (52) formed by the soiled product into the receiving tank (40), and finally an operation of putting the sieving receptacle (30) back in position above the storage tank (22).
